(19) Europäisches Patentamt
European Patent Office
Office européen des brevets

(11) Veröffentlichungsnummer: **0 045 840**
**B1**

(12) # EUROPÄISCHE PATENTSCHRIFT

(45) Veröffentlichungstag der Patentschrift: **21.09.83**

(51) Int. Cl.³: **C 09 B 37/00**, C 09 B 41/00 // D06P3/58

(21) Anmeldenummer: **81104886.7**

(22) Anmeldetag: **24.06.81**

(54) **Verfahren zur Herstellung von Lösungen kationischer Polyazofarbstoffe.**

(30) Priorität: **05.07.80 DE 3025557**

(43) Veröffentlichungstag der Anmeldung: **17.02.82 Patentblatt 82/7**

(45) Bekanntmachung des Hinweises auf die Patenterteilung: **21.09.83 Patentblatt 83/38**

(84) Benannte Vertragsstaaten: **BE CH DE FR GB IT LI**

(56) Entgegenhaltungen:
**EP-A-0 036 553**
**FR-A-1 355 911**
**US-A-2 022 606**

(73) Patentinhaber: **BAYER AG, Zentralbereich Patente, Marken und Lizenzen, D-5090 Leverkusen 1, Bayerwerk (DE)**

(72) Erfinder: **Linhart, Karl, Dr., Heymannstrasse 65, D-5090 Leverkusen (DE)**
Erfinder: **Gleinig, Harald, Dr., Eichholzer Weg 100, D-5068 Odenthal-Neschen (DE)**
Erfinder: **Raue, Roderich, Dr., Berta-von-Suttner-Strasse 48, D-5090 Leverkusen (DE)**
Erfinder: **Kühlthau, Hans-Peter, Dr., Paul-Klee-Strasse 48, D-5090 Leverkusen (DE)**

**EP 0 045 840 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

# Verfahren zur Herstellung von Lösungen kationischer Polyazofarbstoffe

Gegenstand der Erfindung ist ein Verfahren zur Herstellung konzentrierter Lösungen von kationischen Polyazofarbstoffen, dadurch gekennzeichnet, dass man Diaminobenzole der allgemeinen Formel

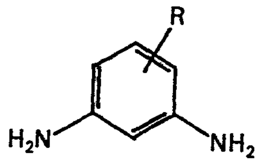

I

in welcher
R für Wasserstoff oder Methyl steht,
in Mischung mit bis zu 30 Mol-% aromatischen Monoaminen der Formel

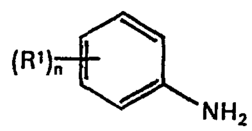

II

in welcher
$R^1$ für Wasserstoff, Halogen, $C_1$- bis $C_4$-Alkyl, $C_1$- bis $C_4$-Alkoxy und $C_1$- bis $C_4$-Acylamino und
n für 1 bis 3 stehen,

in aliphatischen Carbonsäuren mit einem Alkylrest mit 1 bis 3 Kohlenstoffatomen, die gegebenenfalls durch Halogen oder Alkoxy substituiert sein können, löst und bei 0 bis 30°C mit 0,5 bis 0,75 mol eines Salzes oder Esters der salpetrigen Säure pro mol Diamin umsetzt.

Die Farbstoffe, die durch Umsetzung der salzsauren Lösung von m-Phenylendiamin mit Natriumnitrit hergestellt werden, sind unter dem Namen Bismarckbraun und Vesuvin seit langem bekannt. Bei dieser Herstellung wird die Entwicklung von Stickstoff unter Bildung schwach basischer Verbindungen und ausserdem die Kupplung zu höhermolekularen, unlöslichen Farbstoffen als Nebenreaktion beobachtet (E. Täuber und F. Walder, B 30, 2111, 2899, B 33, 2897). So hergestellte Farbstoffe sind erst nach vorheriger Reinigung zur Herstellung von Farbstofflösungen geeignet.

Die Bildung höhermolekularer Produkte lässt sich vermeiden, wenn man die Kupplung in Gegenwart grosser Mengen von Kochsalz vornimmt (US-A 2 022 606). Dieser stark salzhaltige Farbstoff erfordert zur Herstellung einer konzentrierten Farbstofflösung weitere Reinigungsoperationen. Beispielsweise kann er vom Salz befreit werden, indem die Lösung unter Druck ein- oder mehrmals über eine halbdurchlässige Membran geleitet wird, die Wasser und Salz hindurchlässt, während Farbstoffe zurückgehalten werden (DE-B 2 204 725, Beispiel 9).

Zur Herstellung einer Lösung führt man nach einem weiteren bereits beschriebenen Verfahren den Farbstoff zunächst in die Farbbase über und löst diese dann in einem Gemisch von Eisessig und Diethylenglykolmonobutylether (US-A 3 346 322, Beispiel 12).

Bei der Diazotierung von m-Phenylendiamin in aliphatischen Carbonsäuren mit Natriumnitrit im Molverhältnis 1/2 entsteht ein komplexes Gemisch von Diazoniumsalz, Diazoaminoverbindung, Mono- und Bisazofarbstoffen, das nicht für Färbezwecke einsetzbar ist (B.I. Belov und V.V. Kozlov, Zh. Obsh. Khim., Vol. 32, Nr. 10, S. 3362–3368).

Nach diesem Stand der Technik war nicht zu erwarten, dass das erfindungsgemässe Verfahren zu stabilen Farbstofflösungen führen würde, die sich hervorragend zum Färben von holzschliffhaltigem Papier eignen.

Geeignete Diamine der allgemeinen Formel I sind: 1,3-Diamino-benzol, 2,4-Diamino-toluol, 2,6-Diamino-toluol und Mischungen dieser Diamine in jedem Molverhältnis.

Geeignete aromatische Monoamine der Formel II sind: Anilin, 2-Toluidin, 3-Toluidin, 4-Toluidin, 4-Amino-1,3-dimethyl-benzol, 2-Anisidin, 3-Anisidin, 4-Anisidin, 2-Phenetidin, 4-Phenetidin, 2-(4-Amino-phenoxy)-ethanol, 2-Chlor-anilin, 4-Chlor-anilin, 2,4-Dichlor-anilin und 4-Amino-acetanilid.

Durch Mischkupplung mit den aromatischen Monoaminen lässt sich der Farbton der Färbungen auf Papier in gewünschter Weise nuancieren. Mit Anilin erhält man gelbere Farbtöne, mit p-Toluidin, p-Anisidin und p-Phenetidin rötere Farbtöne.

Als aliphatische Carbonsäuren eignen sich: Essigsäure, Propionsäure, 2-Chlor-propionsäure, Glykolsäure, Ethoxyessigsäure, Mono-, Di- und Trichloressigsäure und Milchsäure. Bevorzugt wird Essigsäure verwendet.

Nach einer bevorzugten Verfahrensweise wird die wässrige Natriumnitritlösung unter die Oberfläche der Lösung der aromatischen Aminoverbindungen in aliphatischen Carbonsäuren eingetropft. Hierdurch wird die Bildung höhermolekularer Farbstoffanteile, die zur Lösungsinstabilität führen, praktisch vollständig vermieden.

Der gleiche Effekt wird erreicht, wenn man nach einer weiteren bevorzugten Verfahrensvariante zur Lösung der aromatischen Amine in der aliphatischen Carbonsäure festes Natriumnitrit zugibt und anschliessend Wasser eintropft.

Die Lösungen können auch Zusätze organischer Lösungsmittel enthalten, beispielsweise Ethylenglykol, Propylenglykol, Ethylenglykolmonomethylether, Ethylenglykolmonoethylether, Ethylenglykolmonobutylether, Methylglykolacetat, Ethylglykolacetat, Glakoldiacetat, Monoacetin, Triacetin, Oxypropionitril, Harnstoff, Dimethylharnstoff, Tetramethylharnstoff, Thioharnstoff, Tetramethylensulfon, Pyrrolidon, N-Methyl-pyrrolidon, Ethylencarbonat, Propylencarbonat, Caprolactam und ihre Gemische.

Die Kältestabilität der Lösungen kann hierdurch noch verbessert werden. Bevorzugt enthalten die Farbstofflösungen 5–30 Gew.-% der oben angegebenen Lösungsmittel.

In einigen Fällen hat sich ein Zusatz von Oxidationsmitteln wie $H_2O_2$ zur Stabilisierung der Lösungen bei höheren Temperaturen als vorteilhaft erwiesen. Dabei werden den Farbstofflösungen vorzugsweise 0,5 bis 2 Gew.-% $H_2O_2$ zugesetzt.

Die erfindungsgemäss hergestellten Farbstofflösungen finden Verwendung zum Färben von Cellulosematerial insbesondere Papier.

Beispiel 1

220 g 2,4-Diamino-toluol werden in 1000 ml Eisessig gelöst und 19 g Anilin zugestzt. Nach Abkühlen auf 5°C tropft man innerhalb von 2 h bei 0–5°C 88 g Natriumnitrit, gelöst in 300 ml Wasser, ein. Nach mehrstündigem Nachrühren erhält man eine rückstandsfreie Farbstofflösung, die holzschliffhaltiges Papier in einem klaren Braun färbt.

Verwendet man anstelle von 19 g Anilin 24,6 g 4-Anisidin und verfährt sonst in gleicher Weise, so erhält man eine Farbstofflösung, die holzschliffhaltiges Papier in einem rotstichigen Braun anfärbt.

Beispiel 2

22 g 2,4-Diamino-toluol werden in 100 ml Propionsäure gelöst und 1,9 g Anilin zugesetzt. Nach Abkühlen auf 5°C tropft man in die Lösung 8,8 g Natriumnitrit, gelöst in 30 ml Wasser, innerhalb von 2 h bei 0–5°C ein.

Nach mehrstündigem Nachrühren erhält man eine Farbstofflösung, die holzschliffhaltiges Papier braun färbt.

Mit gleichem Erfolg lässt sich anstelle von Propionsäure auch die gleiche Menge 2-Chlor-propionsäure, Ethoxyessigsäure oder Milchsäure verwenden.

Beispiel 3

9,7 g 1,3-Diamino-benzol und 11,0 g 2,4-Diamino-toluol werden in 100 ml Eisessig gelöst und 2,14 g 2-Toluidin zugesetzt. Dann kühlt man die Lösung auf 5°C ab und lässt eine Lösung von 8,8 g Natriumnitrit in 30 ml Wasser bei 0–5°C innerhalb von 2 h eintropfen. Nach mehrstündigem Nachrühren erhält man eine Farbstofflösung, die holzschliffhaltiges Papier braun färbt.

Mit gleichem Erfolg lassen sich anstelle von 2,14 g 2-Toluidin auch 2,46 g 2-Anisidin, 2,54 g 2-Chlor-anilin, 2,54 g 4-Chloranilin, 3,24 g 2,4-Dichlor-anilin oder 2,74 g 2-Phenetidin einsetzen.

Beispiel 4

9,7 g 1,3-Diamino-benzol und 11,0 g 2,4-Diamino-toluol werden in 100 ml Eisessig gelöst und 2,46 g 4-Anisidin zugesetzt. Nach Abkühlen auf 5°C tropft man eine Lösung von 8,8 g Natriumnitrit in 30 ml Wasser bei 0–5°C unter Kühlen ein. Nach mehrstündigem Rühren erhält man eine Farbstofflösung, die holzschliffhaltiges Papier rotstichig braun anfärbt.

Mit gleichem Erfolg lassen sich anstelle von 2,46 g 4-Anisidin auch 2,74 g 4-Phenetidin, 3,06 g 2-(4-Aminophenoxy)-ethanol oder 3,0 g 4-Amino-acetanilid einsetzen.

Beispiel 5

22 g 2,6-Diamino-toluol werden in 100 ml Eisessig bei 70°C gelöst und auf 0–5°C abgekühlt. Man setzt 1,9 g Anilin zu und tropft dann bei 0–5°C eine Lösung von 8,8 g Natriumnitrit in 30 ml Wasser unter die Oberfläche ein. Nach mehrstündigem Rühren bei Raumtemperatur erhält man eine klare Lösung, die holzschliffhaltiges Papier gelbstichig braun anfärbt.

Beispiel 6

81,3 g eines Gemisches, bestehend aus 65% 2,4-Diaminotoluol und 35% 2,6-Diamino-toluol und 31 g Anilin werden in 240 ml Eisessig und 30 g ε-Caprolactam unter Erwärmen auf ca. 70°C gelöst. Nach Abkühlen auf 5°C werden innerhalb von 2 h 46 g Natriumnitrit, gelöst in 55,5 ml Wasser zugetropft. Man rührt bei 5–10°C über Nacht und setzt dann 10 ml 30%ige $H_2O_2$-Lösung hinzu.

Beispiel 7

66,6 g 1,3-Diamino-benzol und 31 g Anilin werden in 240 ml Eisessig und 30 g ε-Carpolactam bei Raumtemperatur gelöst. Nach Abkühlen auf 5°C tropft man innerhalb von 2 h eine Lösung von 46 g Natriumnitrit in 55,5 ml Wasser hinzu und rührt über Nacht bei 5–10°C nach. Anschliessend werden 10 ml 30%ige $H_2O_2$-Lösung zugesetzt.

**Patentansprüche**

1. Verfahren zur Herstellung konzentrierter Lösungen von kationischen Polyazofarbstoffen, dadurch gekennzeichnet, dass man Diaminobenzole der allgemeinen Formel

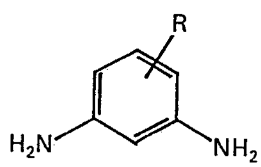

in welcher
R für Wasserstoff oder Methyl steht,
in Mischung mit bis zu 30 Mol-% aromatischen Monoaminen der Formel

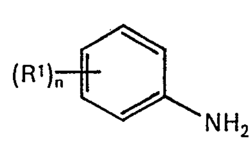

in welcher
$R^1$ für Wasserstoff, Halogen, $C_1$–$C_4$-Alkyl, $C_1$–$C_4$-Alkoxy und $C_1$- bis $C_4$-Acylamino und
n für 1 bis 3 stehen,

in aliphatischen Carbonsäuren mit einem Alkylrest mit 1 bis 3 Kohlenstoffatomen, die gegebenenfalls durch Halogen, Hydroxy oder Alkoxy substituiert sein können, löst und bei 0 bis 30°C mit 0,5 bis 0,75 Mol eines Salzes oder Esters der salpetrigen Säure pro Mol Diamin umsetzt.

2. Verfahren gemäss Anspruch 1, dadurch gekennzeichnet, dass man eine wässrige Natriumnitritlösung unter die Oberfläche der Lösung der aromatischen Aminoverbindungen in aliphatischen Carbonsäuren eintropft.

3. Verfahren gemäss Anspruch 1, dadurch gekennzeichnet, dass man zur Lösung der aromatischen Amine in einer aliphatischen Carbonsäure festes Natriunitrit zugibt und anschliessend Wasser eintropft.

4. Farbstofflösungen gemäss Anspruch 1, dadurch gekennzeichnet, dass sie zur Verbesserung der Kältestabilität 5-30 Gew.-% eines mit Wasser mischbaren Lösungsmittels enthalten.

5. Verfahren gemäss Anspruch 1, dadurch gekennzeichnet, dass man die Polyazofarbstofflösungen mit 0,5-2 Gew.-% $H_2O_2$ versetzt.

6. Verwendung von Farbstofflösungen gemäss Ansprüchen 1 bis 5 zum Färben von Cellulosematerial.

**Revendications**

1. Procédé de production de solutions concentrées de colorants polyazoïques cationiques, caractérisé en ce qu'on dissout des diaminobenzènes de formule générale

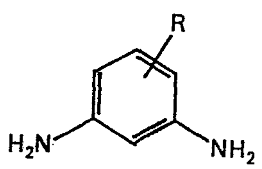

dans laquelle
R représente l'hydrogène ou le groupe méthyle, en mélange avec jusqu'à 30 moles % de monoamines aromatiques de formule

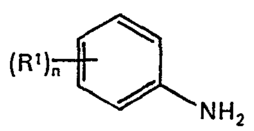

dans laquelle
$R^1$ est l'hydrogène, un groupe alkyle en $C_1$ à $C_4$, alkoxy en $C_1$ à $C_4$, acylamino en $C_1$ à $C_4$ et
n a une valeur de 1 à 3,

dans des acides carboxyliques aliphatiques ayant un reste alkyle de 1 à 3 atomes de carbone, qui peuvent éventuellement être substitués par un halogène ou un radical hydroxy ou alkoxy et on les fait réagir à 0-30°C avec 0,5 à 0,75 mole d'un sel ou ester d'acide nitreux par mole de diamine.

2. Procédé suivant la revendication 1, caractérisé en ce qu'on verse goutte à goutte une solution aqueuse de nitrite de sodium sous la surface de la solution des composés aminés aromatiques dans des acides carboxyliques aliphatiques.

3. Procédé suivant la revendication 1, caractérisé en ce qu'on ajoute du nitrite de sodium solide à la solution des amines aromatiques dans un acide carboxylique aliphatique, puis on verse de l'eau goutte à goutte.

4. Solutions de colorants suivant la revendication 1, caractérisées en ce qu'elles contiennent pour améliorer la stabilité à froid, 5 à 30% en poids d'un solvant miscible à l'eau.

5. Procédé suivant la revendication 1, caractérisé en ce qu'on ajoute 0,5 à 2% en poids de $H_2O_2$ aux solutions de colorants polyazoïques.

6. Utilisation de solutions de colorants suivant les revendications 1 à 5 pour la teinture de matière cellulosique.

**Claims**

1. Process for the preparation of concentrated solutions of cationic polyazo dyestuffs, characterised in that diaminobenzenes of the general formula

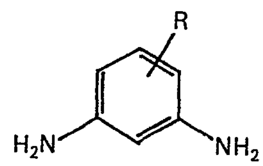

in which
R represents hydrogen or methyl,
mixed with up to 30 mol% of aromatic monoamines of the formula

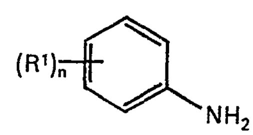

in which
$R^1$ represents hydrogen, halogen, $C_1$-$C_4$-alkyl, $C_1$-$C_4$-alkoxy or $C_1$- to $C_4$-acylamino and
n represents 1 to 3,

are dissolved in aliphatic carboxylic acids which have an alkyl radical with 1 to 3 carbon atoms and can optionally be substituted by halogen, hydroxy or alkoxy, and are reacted with 0.5 to 0.75 mol of a salt or ester of nitrous acid per mol of diamine at 0 to 30°C.

2. Process according to Claim 1, characterised in that an aqueous sodium nitrite solution is added dropwise below the surface of the solution of the aromatic amino compounds in aliphatic carboxylic acids.

3. Process according to Claim 1, characterised in that solid sodium nitrite is added to the solution of the aromatic amines in an aliphatic carboxylic acid, and water is then added dropwise.

4. Dyestuff solutions according to Claim 1, characterised in that, in order to improve their stability in the cold, they contain 5–30% by weight of a water-misclibe solvent.

5. Process according to Claim 1, characterised in that 0.5–2% by weight of $H_2O_2$ is added to the polyazo dyestuff solutions.

6. Use of dyestuff solutions according to Claims 1 to 5 for dyeing cellulose material.